# EUROPEAN PATENT SPECIFICATION

(11) **EP 4 471 683 B1**
(45) Date of publication and mention of the grant of the patent: **18.06.2025**
(21) Application number: 24178475.0
(22) Date of filing: 28.05.2024
(51) Int. Cl.: G06Q 10/04, G06Q 10/08, G06Q 10/087

(54) **DEVICE AND METHOD FOR GENERATING LOGISTICS CENTER LAYOUT**
VORRICHTUNG UND VERFAHREN ZUR ERZEUGUNG EINES LOGISTIKZENTRUMSLAYOUTS
DISPOSITIF ET PROCÉDÉ DE GÉNÉRATION DE DISPOSITION DE CENTRE LOGISTIQUE

(30) Priority: 31.05.2023 KR 20230070162
(43) Date of publication of application: 04.12.2024
(73) Proprietor: Samsung SDS Co., Ltd., Seoul 05510 (KR)
(72) Inventor: Hong, Joonki, 05510 Seoul (KR); Moon, Boyoung, 05510 Seoul (KR)
(74) Representative: Grünecker Patent- und Rechtsanwälte PartG mbB

(56) References cited:
- US-A1- 2019 272 491
- US-A1- 2021 294 930
- QI MINGYAO ET AL: "An Optimal Layout Pattern-Based Solution Approach to the Extended Machine Layout Problem With Multirow Multicolumn Structure", IEEE TRANSACTIONS ON AUTOMATION SCIENCE AND ENGINEERING, IEEE SERVICE CENTER, NEW YORK, NY, US, vol. 20, no. 2, 1 April 2023 (2023-04-01), pages 1408 - 1428, XP011938261, ISSN: 1545-5955, [retrieved on 20220615], DOI: 10.1109/TASE.2022.3182031

## Description

### BACKGROUND OF THE INVENTION

### 1. Field

The present disclosure relates to a logistics center layout generation device and a logistics center layout generation method, which can automatically generate the layout of storage cells for storing items in a logistics center.

### 2. Description of the Related Art

Logistics is a term abbreviated from physical distribution and refers to the flow of goods from a producer to a consumer. To be more specific, logistics includes processes of transporting, unloading, storing, and packaging produced goods, as well as a material distribution process such as distribution processing and transportation infrastructure. Logistics also includes information distribution concepts, such as information networks.

Logistics centers, serving as item storage warehouses, are places where items are temporarily stored, and enable items, which are not immediately distributed, to be stored and released as needed, thereby facilitating timely distribution of the items. In logistics centers, the logistics system efficiency may be evaluated by the time it takes to stack items in the warehouse, the time it takes to release the stacked items from the warehouse, and the quantity of items that can be stored in the same area.

Here, even in logistics centers of the same area, the outgoing time may vary depending on logistics center layouts, such as which items are placed in which direction in each stacking area.

In the past, users configured layouts of a logistics center by generating the layouts of the logistics center in consideration of various requirements of each item, outgoing history, etc. and comparing outgoing times of the generated layouts. However, this method required the users to design each layout individually, and thus limited the number of layouts that may be considered. In addition, when an analysis period needed to be changed, the layouts had to be rearranged, which took virtually the same amount of time as performing the analysis again.
US 2021/294930 A1 refers to a computer-aided warehouse space planning. A computer system obtains a computer-aided design, CAD, file of the warehouse, and the CAD file describes a floor plan of the warehouse with a plurality of patterns in a plurality of layers. A storage space and a plurality of guard objects are identified on the floor plan of the warehouse. The computer system further obtains inventory information of a plurality of product packages to be stored in the warehouse. Based on the inventory information, a plurality of storage types is identified, and a storage area is determined for a subset of product packages associated with each storage type. In accordance with the storage area needed for each storage type, the storage space is divided into a plurality of storage regions for the plurality of product packages, and each storage region is uniquely associated with a respective one of the storage types.
US 2019/0272491 A1 refers to an inventory placement recommendation system. The system and method enable generating inventory placement recommendations for a store based on transaction data. Generated inventory placement recommendation enables arrangement of the inventory of the store based on past transactions to reduce the average travel distance of customers when shopping there.
The publication of Qi Mingyao, et al. titled "An Optimal Layout Pattern-Based Solution Approach to the Extended Machine Layout Problem With Multirow Multicolumn Structure", IEEE Transactions on Automation Science and Engineering, IEEE Service Center, New York, NY, US, vol. 20, no. 2, 1 April 2023 (2023-04-01), pages 1408-1428, refers to an optimal layout pattern-based solution approach to an extended machine layout problem with multirow multicolumn structure.

### SUMMARY

The invention is claimed in the independent claims.
Preferred embodiments are specified in the dependent claims.

This Summary is provided to introduce a selection of concepts in simplified form that are further described below in the Detailed Description. This Summary is not intended to identify key features or essential features of the claimed subject matter, nor is it intended to be used as an aid in determining the scope of the claimed subject matter.

An aspect of the present disclosure is to provide a logistics center layout generation device and a logistics center layout generation method, which can automatically generate the layout of storage cells for storing items in a logistics center.

An aspect of present disclosure is to provide a logistics center layout generation device and a logistics center layout generation method, which can provide a layout capable of optimizing the outgoing time of a logistics center.

An aspect of the present disclosure is to provide a logistics center layout generation device and a logistics center layout generation method, which can generate alternative layouts in a two-step way which generates storage cells based on inventory history and placing the generated storage cells in respective stacking areas.

An aspect of the present disclosure is to provide a logistics center layout generation device and a logistics center layout generation method, which can generate multiple alternative layouts based on combinatorial optimization, and provide a recommended layout by comparing outgoing times in the alternative layouts.

In a general aspect of the disclosure, a logistics center layout generation method for an arrangement of storage cells in multiple stacking areas in a logistics center, which is performed by a computing device, the logistics center layout generation method includes: receiving basic configuration information for generating a layout of the logistics center; generating, based on an inventory history of the logistics center, storage cells configured to store items handled in the logistics center; arranging, based on an outgoing history of the logistics center, the storage cells in each stacking area according to possible combinations of types and arrangement directions of the items; and generating, based on combinatorial optimization, multiple alternative layouts, comparing outgoing times of the alternative layouts, and providing a recommended layout among the multiple alternative layouts.

The basic configuration information may include: master information related to the items; layout information comprising a layout configuration corresponding to the logistics center; history information comprising past inventory and outgoing histories of the logistics center; and analysis condition information configuring an analysis period and a termination condition for extracting the recommended layout.

The master information may include at least one among types of items, types of storage cells used for each type of items, dimensions of each type of storage cell, a list of usage docks for each type of items, or any combination thereof.

The layout information may include at least one among coordinate information of the docks on a layout, position information of each stacking area, a column length of each type of storage cells arranged in the stacking area, a width of an aisle between the storage cells, a transverse passage width, information related to a structure located in the stacking area, or any combination thereof.

In the generating of the storage cells, an average amount of inventory in the logistics center during an analysis period may be obtained from the inventory history, and the storage cells may be generated to accommodate all of the average amount of inventory.

In the arranging of the storage cells, a usage dock for each of the items determined using a usage dock list in case that a combination of the items and arrangement directions for the stacking area may be configured, a corner of the stacking area, closest to the usage dock, may be configured as a starting point, and the storage cells may be sequentially arranged from the starting point in the arrangement directions.

In the arranging of the storage cells, the number of times of outgoing from each of types of the storage cells may be identified from the outgoing history, and a type of storage cell with a higher number of times of outgoing may be arranged at the start point.

The providing of the recommended layout may include: extracting the alternative layouts by using a metaheuristic-based search model for the combinatorial optimization, and calculating outgoing times according to the alternative layouts; identifying a termination condition, and in case the termination condition is not satisfied, repeating re-extracting of an alternative layout using the search model, and calculating an outgoing time according to the re-extracted alternative layout; and in case the termination condition is satisfied, extracting, based on the outgoing times, a recommended layout from the multiple extracted alternative layouts.

In the repeating of the re-extraction and the calculation, the alternative layout may be re-extracted by changing at least one of the arrangement order and arrangement direction of types of items assigned to multiple stacking areas.

In the calculating of the outgoing time, the outgoing time may be calculated by obtaining an outgoing distance required for movement from all storage cells included in the alternative layout to respective usage docks, and applying a movement speed of each equipment used for outgoing to the outgoing distance.

The termination condition may be one among: when the number of searches by the search model reaches a predetermined number; when a search time exceeds a predetermined time; and when the search model fails to extract an alternative layout having a shorter outgoing time within a limit number of times after extracting a first layout in which the outgoing time is shortest.

In the extracting of the recommended layout, the recommended layout may be provided with additional inclusion of utilization thereof.

The logistics center layout generation method may further include: obtaining, in case that a usage layout being applied to the logistics center is received, an outgoing time of the usage layout; comparing the outgoing time of the usage layout with the outgoing time of the recommended layout; and providing the outgoing time of the usage layout.

A computer program may be stored in a medium so as to perform the logistics center layout generation method in combination with hardware.

In another general aspect of the disclosure, a logistics center layout generation device for generating a logistics center layout by arranging storage cells in multiple stacking areas in a logistics center, includes: a processor configured to: receive basic configuration information for generating a layout of the logistics center; generate, based on an inventory history of the logistics center, storage cells configured to store items handled in the logistics center; arrange, based on an outgoing history of the logistics center, the storage cells in each stacking area according to possible combinations of types and arrangement directions of the items; and generate, based on combinatorial optimization, multiple alternative layouts, compare outgoing times of the alternative layouts, and provide a recommended layout among the multiple alternative layouts.

In the generating of the storage cells, an average amount of inventory in the logistics center during an analysis period may be obtained from the inventory history, and the storage cells may be generated to accommodate all of the average amount of inventory.

In the arranging of the storage cells, a usage dock for each of the items may be determined using a usage dock list in case that a combination of the items and arrangement directions for the stacking area is configured, a corner of the stacking area, closest to the usage dock, may be configured as a starting point, and the storage cells may be sequentially arranged from the starting point in the arrangement directions.

In the arranging of the storage cells, the number of times of outgoing from each of types of the storage cells may be identified from the outgoing history, and a type of storage cell with a higher number of times of outgoing may be arranged at the start point.

The providing of the recommended layout may include: extracting the alternative layouts by using a metaheuristic-based search model for the combinatorial optimization, and calculating outgoing times according to the alternative layouts; identifying a termination condition, and in case the termination condition is not satisfied, repeating re-extracting of an alternative layout using the search model, and calculating an outgoing time according to the re-extracted alternative layout; and in case that the termination condition is satisfied, extracting, based on the outgoing times, a recommended layout from the multiple extracted alternative layouts.

The processor may be further configured to: obtain, in case that a usage layout being applied to the logistics center is received, an outgoing time of the usage layout; compare the outgoing time of the usage layout with the outgoing time of the recommended layout; and provide the outgoing time of the usage layout.

In the metaheuristic-based search model, a fitness function may be configured as a total outgoing time of each of the alternative layouts, and the metaheuristic-based search model may include a termination condition to control the time required for searching.

The metaheuristic-based search model may be implemented as at least one of a tabu search, a simulated annealing algorithm, a genetic algorithm, or any combination thereof.

However, the effects that may be achieved by the logistics center layout generation device and the logistics center layout generation method according to embodiments of the present disclosure are not limited to those mentioned above, and other effects not mentioned will be clearly understood by those skilled in the art, to which the present disclosure belongs, from the following description.

### BRIEF DESCRIPTION OF THE DRAWINGS

The above and other aspects, features, and advantages of the present disclosure will be more apparent from the following detailed description taken in conjunction with the accompanying drawings, in which:
FIG. 1 is a block diagram illustrating a logistics center layout generation system according to an embodiment of the present disclosure;
FIG. 2 is a block diagram illustrating a logistics center layout generation device according to an embodiment of the present disclosure;
FIG. 3 is a table showing items and storage cell types for each item according to an embodiment of the present disclosure;
FIG. 4 schematically illustrates layout information of a logistics center according to an embodiment of the present disclosure;
FIG. 5 is a graph showing the result of a search by a search model according to an embodiment of the present disclosure;
FIG. 6 is a table showing recommended layouts according to an embodiment of the present disclosure;
FIGS. 7 and 8 schematically illustrate recommended layouts according to an embodiment of the present disclosure.
FIG. 9 schematically illustrates a logistics center layout generation device according to an embodiment of the present disclosure; and
FIGS. 10 and 11 are flowcharts illustrating a logistics center layout generation method according to an embodiment of the present disclosure.

### DETAILED DESCRIPTION

Hereinafter, embodiments disclosed in the specification will be described in detail with reference to the accompanying drawings. Identical or similar components, regardless of drawing signs, will be assigned the same reference numerals, and redundant descriptions thereof will be omitted. The suffixes "module" and "unit" for components, used in the following description, may be assigned or interchangeably used only for ease of description, and are not intended to have distinct meanings or roles. In other words, as used in the present disclosure, the term "unit" refers to software or a hardware component such as FPGA or ASIC, and the "unit" performs some roles. However, the "unit" is not limited to software or hardware. The "unit" may be configured to be in an addressable storage medium or may be configured to operate one or more processors. Thus, in one example, a "unit" includes components, such as software components, object-oriented software components, class components, and task components, processes, functions, properties, procedures, subroutines, segments of program code, drivers, firmware, microcode, circuits, data, databases, data structures, tables, arrays, and variables. The components and functions provided in units may be combined into fewer components and units or further separated into additional components and units.

Furthermore, in the following description of embodiments disclosed in the specification, a detailed description of known relevant art will be omitted when it is determined that the detailed description may obscure the subject matter of the embodiments disclosed in the specification. Furthermore, it should be understood that the accompanying drawings are intended only to facilitate understanding of the embodiments disclosed in the specification, and that the technical idea disclosed in the specification is not limited by the accompanying drawings. Furthermore, the present disclosure should be construed to cover all modifications
that are within the scope of the present disclosure.

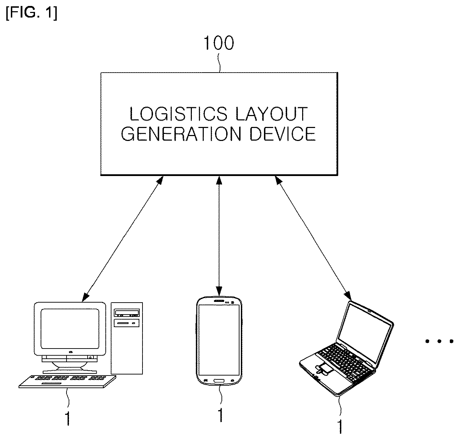

FIG. 1 is a block diagram illustrating a logistics center layout generation system according to an embodiment of the present disclosure.

Referring to FIG. 1, a logistics center layout generation system according to an embodiment of the present disclosure may include a user terminal 1 and a logistics center layout generation device 100.

Hereinafter, the logistics center layout generation system according to an embodiment of the present disclosure will be described with reference to FIG. 1.

The user terminal 1 may be connected to the logistics center layout generation device 100 via wired or wireless communication, and receive a logistics center layout, such as the arrangement of storage cells in a logistics center, through inputting of information about the logistics center. Here, the user terminal 1 may be a smartphone, a tablet PC, a laptop, a wearable device, a desktop, or the like, and may include any other devices that can be connected to a logistics center layout generation device 100 via a wired or wireless network to exchange information.

The logistics center layout generation device 100 may receive information about a logistics center and information about storage cells arranged in the logistics center from the user terminal 1, and may generate, based on the information, a logistics center layout applicable to the logistics center and provide the logistics center layout to the user terminal 1. Here, the logistics center layout generation device 100 may extract and provide layouts that minimizes an outgoing time, based on history information such as inventory history or outgoing history of the logistics center.

In the past, a user manually generated logistics center layouts by generating alternative layouts in consideration of an outgoing history and requirements such as the type and number of storage cells, and comparing the outgoing times of the alternative layouts. However, this method requires the user to design each alternative layout individually, limiting the number of alternative layouts that can be considered. In addition, when the analysis period needs to be changed, the type and number of storage cells required change, and thus layouts need to be rearranged. The rearrangement may require the same amount of time as performing the analysis again.

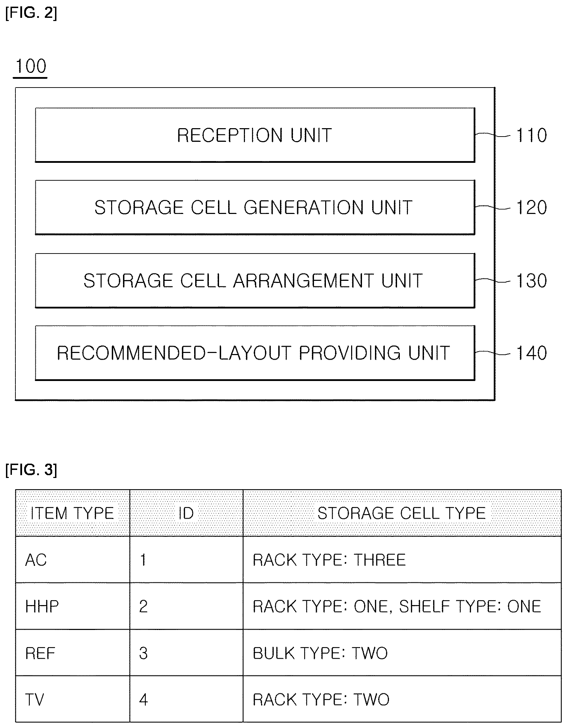

On the other hand, the logistics center layout generation device according to an embodiment of the present disclosure may extract various alternative layouts that can increase the outgoing efficiency of a logistics center in a short time, thereby reducing the effort, time, cost, etc. spent on alternative analysis. Furthermore, according to an embodiment, the minimization of the variance of the storage cell occupancy rate (the number of occupied storage cells/the total number of storage cells) of each stacking area may be set as a fitness function. In this case, it is possible to implement optimization in terms of an occupancy rate for stable operation. Hereinafter, a logistics center layout generation device according to an embodiment of the present disclosure will be described with reference to FIG. 2.

FIG. 2 is a block diagram illustrating a logistics center layout generation device according to an embodiment of the present disclosure.

Referring to FIG. 2, according to an embodiment of the present disclosure, a logistics center layout generation device 100 may include a reception unit 110, a storage cell generation unit 120, a storage cell arrangement unit 130, and a recommended-layout providing unit 140.

The reception unit 110 may receive a basic configuration information for generating a logistics center layout for a logistics center. Here, the basic configuration information received by the reception unit 110 may include master information, layout information, history information, analysis condition information, etc.

The master information is information configured for items, and may include the type of an item (e.g., air conditioner (AC), hand held products (HHP), refrigerator (REF), or television (TV)) used by the logistics center, the type (rack type, shelf type, or bulk type) of storage cell used for each type of item, the dimensions of each type of storage cell, a list of docks used for the types of items, etc., as shown in FIG. 3. The type of storage cell may include a rack, a shelf, bulk, etc., the rack may have multiple tiers in a vertical direction, and items are stored on each tier. The shelf may further include partitions that divide each of the tiers included in the rack into multiple areas, and according in an embodiment, may be implement such that only some of the multiple tiers include partitions. The bulk is used to stack items on the floor. A rack, a shelf, and a bulk are illustrated here as types of storage cells, but various other types of storage cells may be implemented according to embodiments. Within the master information, the dimensions such as width, depth, height, and the number of tiers of each storage cell may be configured.

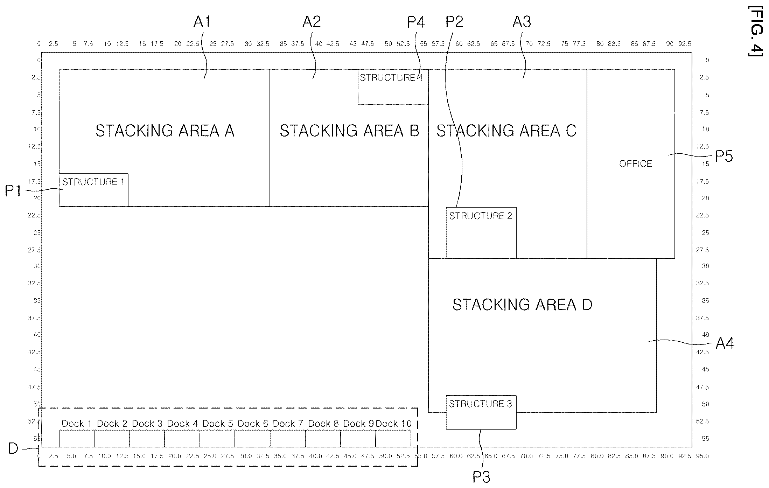

The layout information includes a layout configuration corresponding to the logistics center, and may include coordinate information of docks D included in a layout, position information of stacking areas A1, A2, A3, and A4, column lengths of each type of storage cells arranged in the stacking areas A1, A2, A3, and A4, the width of aisle between the storage cells, a transverse passage width, information about structures located in the stacking areas, etc., as shown in FIG. 4. Here, the aisle between the storage cells may be configured based on the requirements of equipment used to transport an item, and the structure information may include information about clearances for structures P1, P2, P3, P4, and P5. In addition, the layout information may further include option information about the arrangement of the storage cells. For example, when an array in which two back-to-back storage cells are continuously arranged in a row is referred to as a column, the layout information may further include option information about whether different types of items are allowed to be stored within a column, and whether storage cells of different widths, lengths, heights, etc. are allowed to be arranged on one side of the column.

In addition, the history information may include the past inventory history and outgoing history of the logistics center, and the analysis condition information may include an analysis period and a termination condition configured for extracting a recommended layout.

The storage cell generation unit 120 may generate, based on the inventory history of the logistics center, storage cells for storing items processed by the logistics center. That is, alternative layouts may be generated in a two-step manner in which the storage cell generation unit 120 may generate storage cells, and then the storage cell arrangement unit 130 arranges the generated storage cells in stacking areas.

Specifically, the storage cell generation unit 120 may obtain the average amount of inventory in the logistics center for the analysis period from the inventory history and generate storage cells to accommodate all of the average amount of inventory. That is, when all of the generated storage cells are arranged within the stacking areas, a corresponding layout may accommodate all of the inventory in the logistics center.

The storage cell arrangement unit 130 may arrange, based on the outgoing history of the logistics center, the storage cells in each stacking area according to possible combinations of the types and arrangement directions of items. That is, the storage cell arrangement unit 130 may arrange the storage cells for items, generated by the storage cell generation unit 120, in the stacking area separately in each arrangement direction, thereby performing the arrangement for any number of possible cases. Here, when an array in which two storage cells are continuously arranged in a row it is referred to as a column, the arrangement directions correspond to directions in which the column extends, and may be divided into two directions, horizontal and vertical, depending on an embodiment. In this case, when there are N types of items, the storage cell arrangement unit 130 may perform 2*N2 arrangements of storage cells. For example, when there are four stacking areas A1, A2, A3, and A4, four types of items of refrigerators, washing machines, TVs, and air conditioners, and two arrangement directions, horizontal and vertical, the four items may each be arranged twice in the horizontal and vertical directions in one stacking area, and 2*4*4 = 32 arrangements may be performed for all of the four stacking areas.

On the other hand, when a combination of items and arrangement directions for the stacking area is configured, the storage cell arrangement unit 130 may determine a usage dock for each item by using a usage dock list. Here, the storage cell arrangement unit 130 may configure a corner of the stacking area, closest to the usage dock, as a starting point, and sequentially arrange storage cells from the starting point along the arrangement directions. In this case, the storage cell arrangement unit 130 may check the number of times of outgoing from each of types of the storage cells from the outgoing history and arrange, at the starting point, a type of storage cell with the highest number of times of outgoing. In this way, each storage cell may be arranged to minimize an outgoing distance.

In addition, the storage cell arrangement unit 130 may arrange each storage cell based on the master information and the layout information, and when there are the structures P1, P2, P3, P4, and P5, may perform the arrangement in consideration of the clearances for the structures, etc.

The recommended-layout providing unit 140 may generate multiple alternative layouts based on combinatorial optimization, compare the outgoing times of the alternative layouts, and provide a recommended layout among the multiple alternative layouts.

Specifically, the recommended-layout providing unit 140 may use a metaheuristic-based search model for the combinatorial optimization, wherein the fitness function may be configured as a total outgoing time of each alternative layout. In this case, the search model may be implemented as tabu search, simulated annealing, genetic algorithm, etc. In addition, the search model may be implemented to reflect various other types of algorithms.

Meanwhile, the recommended-layout providing unit 140 may generate one alternative layout by combining the type and arrangement direction of an item arranged in each stacking area and the placement direction, and may obtain an outgoing time for each alternative layout and provide an optimal alternative layout as a recommended layout. In this case, when there are N stacking areas, N types of items, and two arrangement directions, horizontal and vertical, the total search space is 2N*N!. For example, when there are 4 stacking areas, A1, A2, A3, and A4, 4 types of items, refrigerator, washing machine, TV, and air conditioner, and two arrangement directions, horizontal or vertical, the total search space is 24*4! = 384 layouts.

In general, in the case of the combinatorial optimization problem, when the optimal result is found by searching the total search space, too much computational time is required, so metaheuristic-based search models may be used to perform efficient search. Here, a termination condition applicable to each search model may be configured to control the time required for searching.

Specifically, the recommended-layout providing unit 140 may extract an alternative layout by using a search model and calculate an outgoing time based on the alternative layout. According to an embodiment, an alternative layout may be initially randomly generated and applied. For example, when an alternative layout of (1H, 3V, 2H, 4H) may be generated, this layout corresponds to a layout in which item 1 is placed horizontally in stacking area A, item 3 is placed vertically in stacking area B, and items 2 and 4 are placed horizontally in stacking area C and stacking area D, respectively.

Here, the outgoing time may be calculated by obtaining an outgoing distance required for movement from all storage cells included in the alternative layout to respective usage docks, and then applying the movement speed of equipment used at the time of outgoing. In this case, the outgoing distance may be obtained by applying an A* algorithm and considering an actual movement path from each storage cell to a usage dock, or by simplifying the distance between the cell and the usage dock by using the Manhattan distance measurement method.

Then, the termination condition is checked, and when the termination condition is not satisfied, re-extracting an alternative layout using the search model and calculating an outgoing time according to the re-extracted alternative layout may be repeated. According to an embodiment, a new alternative layout may be generated by changing the order of arrangement of the types of items in a stacking area of an existing alternative layout, or by changing the direction of arrangement thereof. For example, the alternative layout of (1H, 3V, 2H, 4H) may become (3V, 1H, 2H, 4H) by performing an arrangement order swap, and (3V, 1H, 2H, 4H) may become (3V, 1H, 2V, 4H) by applying an arrangement direction swap to the stacking area C. In this way, the new alternative layout may be generated and re-extracted by randomly applying the arrangement order swap and the arrangement direction swap to the existing alternative layout.

Here, the termination condition may be configured as "when the number of searches by the search model reaches a predetermined number" or as "when the search time exceeds a predetermined time". For example, the search may be terminated when the number of searches reaches 100, or may be terminated when the search time reaches 12 hours. In addition, according to an embodiment, the termination condition may be configured as "when the search model fails to extract an alternative layout with a shorter outgoing time within a limit number of times after extracting an alternative layout in which the outgoing time is shortest. That is, the search may be stopped when the search model does not find an alternative layout with better performance even if the search continues. However, the present disclosure is not limited thereto, and various termination conditions applicable in the search model may be configured according to embodiments.

Then, when the termination condition is satisfied, the recommended-layout providing unit 140 may extract, based on the outgoing time, a recommended layout from the multiple extracted alternative layouts. For example, alternative layouts with outgoing times below a predetermined value may all be extracted as recommended layouts, or the alternative layouts may be sorted in order of decreasing outgoing time, and a top predetermined number of alternative layouts may be provided as recommended layouts. Various other ways may be used to provide recommended layouts based on the outgoing time.

In addition, according to an embodiment, recommended layouts may be provided with additional inclusion of utilization thereof. That is, when the outgoing times of recommended layouts are not significantly different, the recommended layouts may be provided such that the layout of the logistics center can be selected based on the utilization. Here, the utilization corresponds to the ratio of the capacity of occupied cells, which are storage cells loaded with items, to the capacity of all storage cells.

On the other hand, the reception unit 110 may receive a usage layout that is being applied to the logistics center, in which case the recommended-layout providing unit 140 may obtain an outgoing time for the usage layout. Then, the outgoing time of the usage layout may be provided along with the recommended layouts, so that a user can compare the outgoing times of the recommended layouts with the outgoing time of the usage layout.

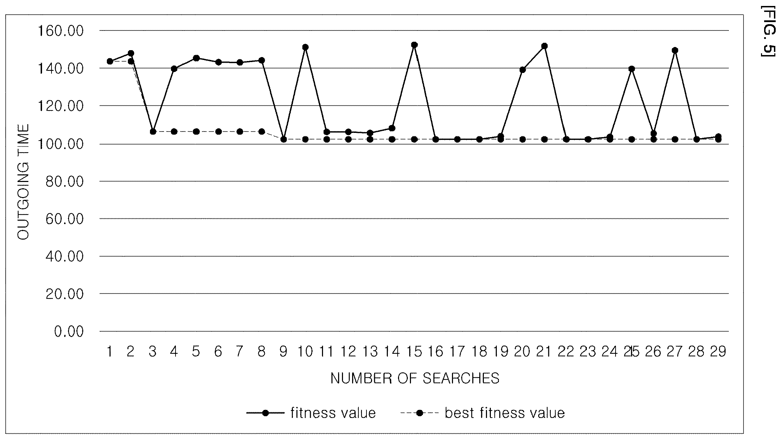

FIG. 5 is a graph showing the result of a search by a search model according to an embodiment of the present disclosure. Referring to FIG. 5, it may be observed that a 24^{th} alternative layout has an outgoing time of a minimum value, and there is no improvement in outgoing time after that. Here, Tabu search was used as a search model, and the execution time of the search model was about 4 minutes (244 seconds). In addition, it took about 10 seconds to generate storage cells and arrange the storage cells, and about 2 minutes to input a generated result into a database, resulting in a total execution time of about 6 minutes (349 seconds) with respect to a total of about 1500 storage cells.

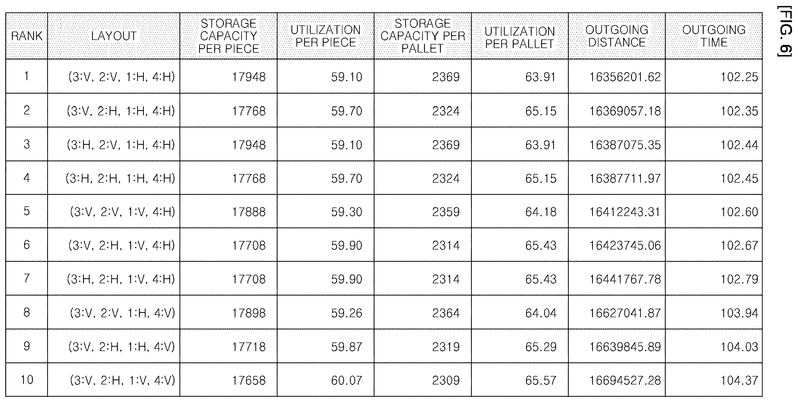

FIG. 6 is a table showing recommended layouts according to an embodiment of the present disclosure. Referring to FIG. 6, it may be observed that in the recommended layouts, the arrangement order of items in each stacking area is the same, 3-2-1-4, and only the arrangement direction is different in the combination of horizontal and vertical directions. Since outgoing times of the recommended layouts are not significantly different, a user can choose one from among the recommended layouts by referring to auxiliary indicators such as storage capacity or utilization.

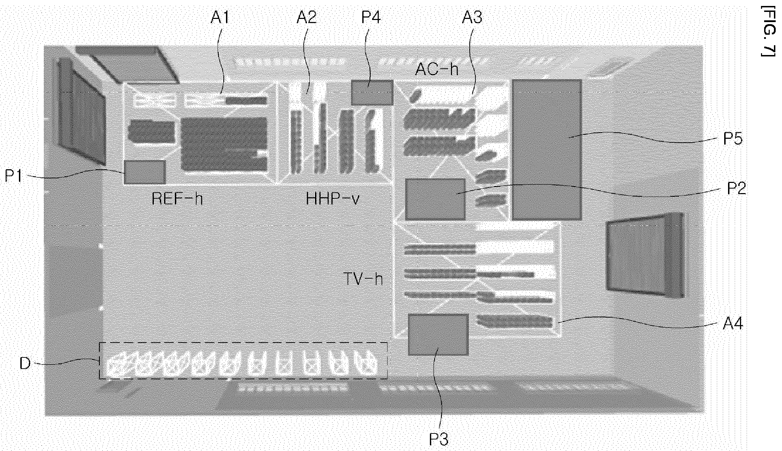

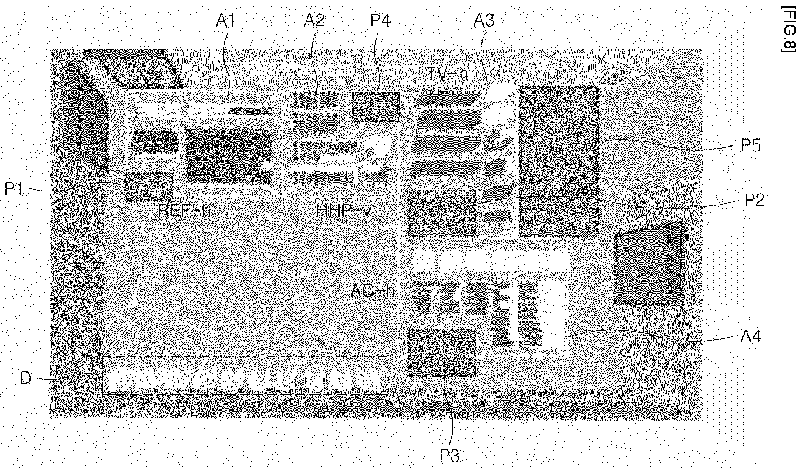

FIG. 7 illustrates an optimal layout found by a search model, and FIG. 8 illustrates a layout with the longest outgoing time among attempted combinations. The outgoing time of the layout in FIG. 7 is 102.25, which is only about 66% of the outgoing time of the layout in FIG. 8, which is 152.09. Thus, it may be observed that the outgoing time varies significantly depending on the layout design of a logistics center.

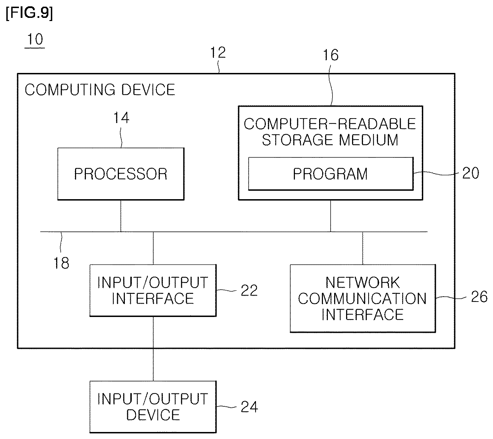

FIG. 9 is a block diagram illustrating a computing environment 10 suitable for use in exemplary embodiments. In the illustrated embodiment, component may each have different functions and capabilities in addition to those described below, and additional components, in addition to those described below, may be included.

The illustrated computing environment 10 includes a computing device 12. In an embodiment, the computing device 12 may be a device (e.g., the logistics center layout generation device 100) that generates a logistics center layout by arranging storage cells in multiple stacking areas in a logistics center.

The computing device 12 includes at least one processor 14, a computer-readable storage medium 16, and a communication bus 18. The processor 14 may cause the computing device 12 to operate according to the exemplary embodiments described above. For example, the processor 14 may execute one or more programs stored on the computer-readable storage medium 16. The one or more programs may include one or more computer-executable instructions. The computer-executable instructions may be configured to cause, when executed by the processor 14, the computing device 12 to perform operations according to the exemplary embodiments.

The computer-readable storage medium 16 is configured to store computer-executable instructions or program code, program data, and/or other suitable forms of information. A program 20 stored on the computer-readable storage medium 16 includes a set of instructions executable by the processor 14. In an embodiment, the computer-readable storage medium 16 may be a memory (volatile memory, such as random-access memory, non-volatile memory, or an appropriate combination thereof), one or more magnetic disk storage devices, optical disk storage devices, flash memory devices, or any other types of storage media that are accessible by the computing device 12 and capable of storing desired information, or an appropriate combination thereof.

The communication bus 18 interconnects various other components of the computing device 12, including the processor 14 and the computer-readable storage medium 16.

The computing device 12 may also include one or more input/output interfaces 22, which provide interfaces for one or more input/output devices 24, and one or more network communication interfaces 26. The input/output interfaces 22 and the network communication interfaces 26 are connected to the communication bus 18. The input/output devices 24 may be connected to other components of the computing device 12 via the input/output interfaces 22. The exemplary input/output devices 24 may include input devices such as a pointing device (such as a mouse or trackpad), a keyboard, a touch input device (such as a touchpad or touchscreen), a voice or sound input device, various types of sensor devices and/or imaging devices, and/or output devices such as a display device, a printer, a speaker, and/or a network card. The exemplary input/output devices 24 may be included inside the computing device 12 as components constituting the computing device 12, or may be connected to the computing device 12 as separate devices distinct from the computing device 12.

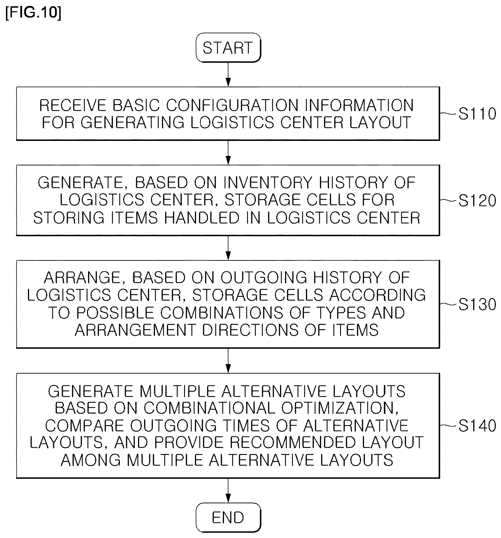

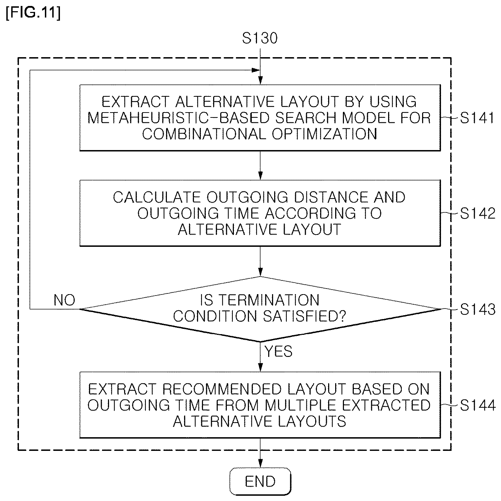

FIGS. 10 and 11 are flowcharts illustrating a logistics center layout generation method according to an embodiment of the present disclosure. According to an embodiment, each operation in FIGS. 10 and 11 may be performed by a logistics center layout generation device according to an embodiment of the present disclosure.

Referring to FIG. 10, a logistics center layout generation device may receive basic configuration information for generating a layout of a logistics center (S110). The basic configuration information may include master information, layout information, history information, analysis condition information, etc.

The master information is information configured for items, and may include the type of an item used by the logistics center, the type of storage cell used for each type of item, the dimensions of each type of storage cell, a list of docks used for the types of items, etc.

The layout information includes a layout configuration corresponding to the logistics center, and may include coordinate information of docks included in a layout, position information of each stacking area, column lengths of each type of storage cells arranged in the stacking area, the width of aisle between the storage cells, a transverse passage width, information about a structure located in the stacking area. Here, the aisle between the storage cells may be configured based on the requirements of equipment used to transport an item, and the structure information may include information about a clearance for each structure. In addition, the layout information may further include option information about storage cell arrangement.

In addition, the history information may include the past inventory history and outgoing history of the logistics center, and the analysis condition information may include an analysis period and a termination condition configured for extracting a recommended layout.

Subsequently, the logistics center layout generation device may generate, based on the inventory history of the logistics center, storage cells for storing items processed by the logistics center (S120). Specifically, the logistics center layout generation device may obtain the average amount of inventory in the logistics center for the analysis period from the inventory history and generate storage cells to accommodate all of the average amount of inventory. That is, when all of the generated storage cells are arranged within the stacking areas, a corresponding layout may accommodate all of the inventory in the logistics center.

In addition, the logistics center layout generation device may arrange, based on the outgoing history of the logistics center, the storage cells in each stacking area according to possible combinations of the types and arrangement directions of items (S130). That is, the logistics center layout generation device may arrange the generated storage cells for items in the stacking area separately in each arrangement direction, thereby performing the arrangement for any number of possible cases. Here, when there are two arrangement directions, horizontal and vertical, and N types of items, the logistics center layout generation device may perform 2*N2 arrangements of storage cells.

On the other hand, when a combination of items and arrangement directions for the stacking area is configured, the logistics center layout generation device may determine a usage dock for each item by using a usage dock list. Here, the logistics center layout generation device may configure a corner of the stacking area, closest to the usage dock, as a starting point, and sequentially arrange the storage cells from the starting point along the arrangement directions. In this case, the logistics center layout generation device may check the number of times of outgoing from each of types of the storage cells from the outgoing history and arrange, at the starting point, a type of storage cell with the highest number of times of outgoing.

Then, the logistics center layout generation device may generate multiple alternative layouts based on combinatorial optimization, compare the delivery times of the alternative layouts, and provide a recommended layout among the multiple alternative layouts (S140).

Specifically, referring to FIG. 11, the logistics center layout generation device may use a metaheuristic-based search model for the combinatorial optimization to extract an alternative layout (S141). Here, the search model may be implemented as tabu search, simulated annealing, genetic algorithm, etc. In this case, the fitness function may be the total outgoing time of each alternative layout. According to an embodiment, an alternative layout may be initially randomly generated and applied.

Then, an outgoing distance and an outgoing time according to the alternative layout may be calculated (S142). Here, the outgoing time may be calculated by obtaining an outgoing distance required for movement from all storage cells included in the alternative layout to respective usage docks, and then applying the movement speed of equipment used at the time of outgoing. In this case, the outgoing distance may be obtained by applying an A* algorithm and considering an actual movement path from each storage cell to a usage dock, or by simplifying the distance between the cell and the usage dock by using the Manhattan distance measurement method.

Then, whether a termination condition is satisfied is checked (S143), and when the termination condition is not satisfied, re-extracting an alternative layout using the search model and calculating an outgoing time according to the re-extracted alternative layout may be repeated (S144). According to an embodiment, a new alternative layout may be generated by changing the arrangement order of the types of items in a stacking area of an existing alternative layout, or by changing the arrangement direction thereof.

Here, the termination condition may be configured as "when the number of searches by the search model reaches a predetermined number" or as "when the search time exceeds a predetermined time". For example, the search may be terminated when the number of searches reaches 100, or may be terminated when the search time reaches 12 hours. In addition, according to an embodiment, the termination condition may be configured as "when the search model fails to extract an alternative layout with a shorter outgoing time within a limit number of times after extracting an alternative layout in which the outgoing time is shortest. That is, the search may be stopped when the search model does not find an alternative layout with better performance even if the search continues. However, the present disclosure is not limited thereto, and various termination conditions applicable in the search model may be variously configured according to embodiments.

Then, when the termination condition is satisfied (S144), the logistics center layout generation device may extract, based on the outgoing time, a recommended layout from multiple extracted alternative layouts. For example, alternative layouts with outgoing times below a predetermined value may all be extracted as recommended layouts, or the alternative layouts may be sorted in order of decreasing outgoing time, and a top predetermined number of alternative layouts may be provided as recommended layouts. In various other ways, recommended layouts may be provided based on the outgoing time.

In addition, according to an embodiment, recommended layouts may be provided with additional inclusion of utilization thereof. That is, when the outgoing times of recommended layouts are not significantly different, the recommended layouts may be provided such that the layout of the logistics center can be selected based on the utilization.

Additionally, the logistics center layout generation device may receive a usage layout that is being applied to the logistics center, in which case the logistics center layout generation device may obtain an outgoing time for the usage layout. Then, the outgoing time of the usage layout may be provided along with the recommended layouts, so that a user can compare the outgoing times of the recommended layouts with the outgoing time of the usage layout.

The present disclosure described above may be implemented as computer-readable code in a medium in which a program is recorded. The computer-readable medium may continuously store a computer-executable program, or may temporarily store the computer-executable program for execution or download. Furthermore, the medium may be various recording or storage means in the form of a single piece of hardware or a combination of multiple pieces of hardware, and is not limited to a medium directly connected to a computer system, but may be distributed over a network. Examples of media may include: a magnetic medium, such as a hard disk, a floppy disk, and a magnetic tape; an optical recording medium, such as a CD-ROM and a DVD; a magneto-optical medium, such as a floptical disk; and a medium configured to store program instructions, including ROM, RAM, flash memory, and the like. Other examples of media may include recording or storage media managed by app stores that distribute applications, sites that provide or distribute various other types of software, servers, and the like. Accordingly, the detailed description should be considered to be exemplary and not restrictive in all aspects. The scope of the present disclosure should be determined by a reasonable interpretation of the appended claims.

The present disclosure is not limited by the foregoing embodiments and the accompanying drawings. It will be apparent to those skilled in the art to which the present disclosure belongs that substitutions, modifications and changes may be made to the components according to the present disclosure without departing from the technical idea of the present disclosure.

## Claims

1. A logistics center layout generation method for an arrangement of storage cells in multiple stacking areas (A1, A2, A3, A4) in a logistics center, the logistics center layout generation method comprising:
receiving (S110) basic configuration information for generating a layout of the logistics center;
generating (S120), based on an inventory history of the logistics center, storage cells configured to store items handled in the logistics center;
arranging (S130), based on an outgoing history of the logistics center, the generated storage cells for the items in each stacking area according to possible combinations of types and arrangement directions of the items; and
generating (S140), based on combinatorial optimization, multiple altemative layouts, comparing outgoing times of the alternative layouts, and providing a recommended layout among the multiple alternative layouts,
wherein the arranging (S130) of the storage cells comprises:
determining a usage dock for each of the items by using a usage dock list in case that a combination of the items and arrangement directions for the stacking area is configured,
configuring a corner of the stacking area closest to the usage dock as a starting point, and
sequentially arranging the storage cells from the starting point in the arrangement directions.

2. The logistics center layout generation method of claim 1, wherein the basic configuration information comprises:
master information related to the items;
layout information comprising a layout configuration corresponding to the logistics center;
history information comprising past inventory and outgoing histories of the logistics center; and
analysis condition information configuring an analysis period and a termination condition for extracting the recommended layout.

3. The logistics center layout generation method of claim 2, wherein the master information comprises at least one among types of items, types of storage cells used for each type of items, dimensions of each type of storage cell, a list of usage docks for each type of items, or any combination thereof.

4. The logistics center layout generation method of claim 2, wherein the layout information comprises at least one among coordinate information of the docks on a layout, position information of each stacking area, a column length of each type of storage cells arranged in the stacking area, a width of an aisle between the storage cells, a transverse passage width, information related to a structure located in the stacking area, or any combination thereof.

5. The logistics center layout generation method of claim 1, wherein in the generating (S120) of the storage cells, an average amount of inventory in the logistics center during an analysis period is obtained from the inventory history, and the storage cells are generated to accommodate all of the average amount of inventory.

6. The logistics center layout generation method of claim 1, wherein in the arranging (S130) of the storage cells, the number of times of outgoing from each of types of the storage cells is identified from the outgoing history, and a type of storage cell with a higher number of times of outgoing is arranged at the start point.

7. The logistics center layout generation method of claim 1, wherein the providing of the recommended layout comprises:
extracting (S141) the alternative layouts by using a metaheuristic-based search model for the combinatorial optimization, and calculating outgoing times according to the alternative layouts;
identifying (S142) a termination condition, and in case the termination condition is not satisfied, repeating re-extracting of an alternative layout using the search model, and calculating an outgoing time according to the re-extracted alternative layout; and
in case that the termination condition is satisfied, extracting (S144), based on the outgoing times, a recommended layout from the multiple extracted altemative layouts.

8. The logistics center layout generation method of claim 7, wherein in the repeating of the re-extraction and the calculation, the alternative layout is re-extracted by changing at least one of the arrangement order and arrangement direction of types of items assigned to multiple stacking areas.

9. The logistics center layout generation method of claim 7, wherein in the calculating of the outgoing time, the outgoing time is calculated by obtaining an outgoing distance required for movement from all storage cells included in the alternative layout to respective usage docks, and applying a movement speed of each equipment used for outgoing to the outgoing distance.

10. The logistics center layout generation method of claim 7, wherein the termination condition is one among:
when the number of searches by the search model reaches a predetermined number;
when a search time exceeds a predetermined time; and
when the search model fails to extract an alternative layout having a shorter outgoing time within a limit number of times after extracting a first layout in which the outgoing time is shortest.

11. The logistics center layout generation method of claim 8, wherein in the extracting (S144) of the recommended layout, the recommended layout is provided with additional inclusion of utilization thereof.

12. The logistics center layout generation method of claim 1, further comprising:
obtaining, in case that a usage layout being applied to the logistics center is received, an outgoing time of the usage layout;
comparing the outgoing time of the usage layout with the outgoing time of the recommended layout; and
providing recommended layouts based on their outgoing times.

13. A computer program stored in a medium so as to perform the logistics center layout generation method of claim 1 when executed by a processor (14).

14. A logistics center layout generation device for generating a logistics center layout by arranging storage cells in multiple stacking areas in a logistics center, comprising:
a processor (14) configured to:
receive (S110) basic configuration information for generating a layout of the logistics center;
generate (S120), based on an inventory history of the logistics center, storage cells configured to store items handled in the logistics center;
arrange (S130), based on an outgoing history of the logistics center, the storage cells for the items in each stacking area according to possible combinations of types and arrangement directions of the items; and
generate (S140), based on combinatorial optimization, multiple alternative layouts, compare outgoing times of the alternative layouts, and provide a recommended layout among the multiple alternative layouts,
wherein the processor (14) is further configured to arrange (S130) the storage cells for the items by:
determining a usage dock for each of the items by using a usage dock list in case that a combination of the items and arrangement directions for the stacking area is configured,
configuring a corner of the stacking area closest to the usage dock as a starting point, and
sequentially arranging the storage cells from the starting point in the arrangement directions.

## Patentansprüche

1. Verfahren zur Erstellung eines Logistikzentrums-Layouts für eine Anordnung von Lagerzellen in mehreren Stapelbereichen (A1, A2, A3, A4) in einem Logistikzentrum, wobei das Verfahren zur Erstellung eines Logistikzentrums-Layouts Folgendes umfasst:
Empfangen (S110) von Basiskonfigurationsinformationen zur Erstellung eines Layouts des Logistikzentrums;
Erstellen (S120) von Lagerzellen auf Basis einer Bestandshistorie des Logistikzentrums, die zur Lagerung von im Logistikzentrum gehandhabten Artikeln konfiguriert sind;
Anordnen (S130), auf Basis einer Ausgangsgeschichte des Logistikzentrums, der erzeugten Lagerzellen für die Artikel in jedem Stapelbereich gemäß möglicher Kombinationen von Typen und Anordnungsrichtungen der Artikel; und
Erzeugen (S140), auf Basis kombinatorischer Optimierung, mehrerer alternativer Layouts, Vergleichen der Ausgangszeiten der alternativen Layouts und Bereitstellen eines empfohlenen Layouts unter den mehreren alternativen Layouts,
wobei das Anordnen (S130) der Lagerzellen umfasst:
Bestimmen eines Verwendungsdocks für jedes der Artikel unter Verwendung einer Verwendungsdockliste für den Fall, dass eine Kombination der Artikel und Anordnungsrichtungen für den Stapelbereich konfiguriert ist,
Konfigurieren einer Ecke des Stapelbereichs, die dem Verwendungsdock am nächsten ist, als Startpunkt und
sequentielles Anordnen der Lagerzellen vom Startpunkt in den Anordnungsrichtungen.

2. Verfahren zur Erstellung eines Logistikzentrums-Layouts nach Anspruch 1, wobei die Grundkonfigurationsinformationen Folgendes umfassen:
Masterinformationen in Bezug auf die Artikel;
Layoutinformationen, die eine dem Logistikzentrum entsprechende Layoutkonfiguration umfassen;
Verlaufsinformationen, die vergangene Bestands- und Ausgangsverläufe des Logistikzentrums umfassen; und
Analysebedingungsinformationen, die einen Analysezeitraum und eine Abbruchbedingung für die Extraktion des empfohlenen Layouts konfigurieren.

3. Verfahren zur Erstellung eines Logistikzentrums-Layouts nach Anspruch 2, wobei die MasterInformationen mindestens einen der folgenden Typen umfassen: Artikeltypen, Typen von Lagerzellen, die für jeden Artikeltyp verwendet werden, Abmessungen jedes Typs von Lagerzellen, eine Liste von Verwendungsdocks für jeden Artikeltyp oder eine beliebige Kombination davon.

4. Verfahren zur Erstellung eines Logistikzentrums-Layouts nach Anspruch 2, wobei die LayoutInformationen mindestens eines der folgenden Elemente umfassen: Koordinateninformationen der Docks auf einem Layout, Positionsinformationen jedes Stapelbereichs, eine Spaltenlänge jedes Typs von Lagerzellen, die in dem Stapelbereich angeordnet sind, eine Breite eines Gangs zwischen den Lagerzellen, eine Querdurchgangsbreite, Informationen in Bezug auf eine Struktur, die sich in dem Stapelbereich befindet, oder eine beliebige Kombination davon.

5. Verfahren zur Erstellung eines Logistikzentrums-Layouts nach Anspruch 1, wobei bei der Erstellung (S120) der Lagerzellen eine durchschnittliche Menge an Bestand im Logistikzentrum während eines Analysezeitraums aus der Bestandshistorie erhalten wird und die Lagerzellen so erstellt werden, dass sie die gesamte durchschnittliche Menge an Bestand aufnehmen können.

6. Verfahren zur Erstellung eines Logistikzentrums-Layouts nach Anspruch 1, wobei beim Anordnen (S130) der Lagerzellen die Anzahl der Ausgangszeiten von jeder der Arten von Lagerzellen aus der Ausgangsverlaufsgeschichte ermittelt wird und eine Art von Lagerzelle mit einer höheren Anzahl von Ausgangszeiten am Startpunkt angeordnet wird.

7. Verfahren zur Erstellung eines Logistikzentrums-Layouts nach Anspruch 1, wobei das Bereitstellen des empfohlenen Layouts umfasst:
Extrahieren (S141) der alternativen Layouts unter Verwendung eines metaheuristikbasierten Suchmodells für die kombinatorische Optimierung und Berechnen von Ausgangszeiten gemäß den alternativen Layouts;
Identifizieren (S142) einer Abbruchbedingung und, falls die Abbruchbedingung nicht erfüllt ist, Wiederholen des erneuten Extrahierens eines alternativen Layouts unter Verwendung des Suchmodells und Berechnen einer Ausgangszeit gemäß dem erneut extrahierten alternativen Layout; und
falls die Abbruchbedingung erfüllt ist, Extrahieren (S144) eines empfohlenen Layouts aus den mehrfach extrahierten alternativen Layouts auf Basis der Ausgangszeiten.

8. Verfahren zur Erzeugung eines Logistikzentrums-Layouts nach Anspruch 7, wobei bei der Wiederholung der erneuten Extraktion und der Berechnung das alternative Layout durch Ändern mindestens einer der Anordnungsreihenfolge und der Anordnungsrichtung von Artikeltypen, die mehreren Stapelbereichen zugeordnet sind, erneut extrahiert wird.

9. Verfahren zur Erzeugung eines Logistikzentrums-Layouts nach Anspruch 7, wobei bei der Berechnung der Ausgangszeit die Ausgangszeit berechnet wird, indem eine Ausgangsdistanz ermittelt wird, die für die Bewegung von allen Lagerzellen, die in dem alternativen Layout enthalten sind, zu jeweiligen Verwendungsdocks erforderlich ist, und eine Bewegungsgeschwindigkeit jeder Ausrüstung, die für den Ausgang verwendet wird, auf die Ausgangsdistanz angewendet wird.

10. Verfahren zur Erzeugung eines Logistikzentrums-Layouts nach Anspruch 7, wobei die Abbruchbedingung eine der folgenden ist:
wenn die Anzahl der Suchvorgänge durch das Suchmodell eine vorbestimmte Anzahl erreicht;
wenn eine Suchzeit eine vorbestimmte Zeit überschreitet; und
wenn das Suchmodell es nicht schafft, ein alternatives Layout mit einer kürzeren Ausgangszeit innerhalb einer begrenzten Anzahl von Malen nach dem Extrahieren eines ersten Layouts, in dem die Ausgangszeit am kürzesten ist, zu extrahieren.

11. Verfahren zur Erzeugung eines Logistikzentrums-Layouts nach Anspruch 8, wobei beim Extrahieren (S144) des empfohlenen Layouts das empfohlene Layout mit einer zusätzlichen Einbeziehung seiner Nutzung bereitgestellt wird.

12. Verfahren zur Erzeugung eines Logistikzentrums-Layouts nach Anspruch 1, das ferner Folgendes umfasst:
Erhalten einer Ausgangszeit des Nutzungslayouts, falls ein auf das Logistikzentrum angewandtes Nutzungslayout empfangen wird;
Vergleichen der Ausgangszeit des Nutzungslayouts mit der Ausgangszeit des empfohlenen Layouts; und
Bereitstellen empfohlener Layouts auf Basis ihrer Ausgangszeiten.

13. Computerprogramm, das auf einem Medium gespeichert ist, um das Verfahren zur Erzeugung eines Logistikzentrums-Layouts nach Anspruch 1 auszuführen, wenn es von einem Prozessor (14) ausgeführt wird.

14. Logistikzentrum-Layout-Erzeugungsvorrichtung zum Erzeugen eines Logistikzentrum-Layouts durch Anordnen von Lagerzellen in mehreren Stapelbereichen in einem Logistikzentrum, umfassend:
einen Prozessor (14), der so konfiguriert ist, dass er:
Grundkonfigurationsinformationen zum Erzeugen eines Layouts des Logistikzentrums empfängt (S110);
auf Basis einer Bestandsverlaufs des Logistikzentrums Lagerzellen erzeugt (S120), die so konfiguriert sind, dass sie in dem Logistikzentrum gehandhabte Artikel lagern;
Anordnen (S130), auf Basis einer Ausgangsgeschichte des Logistikzentrums, der Lagerzellen für die Artikel in jedem Stapelbereich gemäß möglicher Kombinationen von Typen und Anordnungsrichtungen der Artikel; und
Erzeugen (S140), auf Basis kombinatorischer Optimierung, mehrerer alternativer Layouts, Vergleichen der Ausgangszeiten der alternativen Layouts und Bereitstellen eines empfohlenen Layouts unter den mehreren alternativen Layouts,
wobei der Prozessor (14) ferner so konfiguriert ist, dass er die Lagerzellen für die Gegenstände anordnet (S130), indem er:
für jeden der Gegenstände eine Verwendungsstation bestimmt, indem er eine Verwendungsstationsliste verwendet, falls eine Kombination der Gegenstände und Anordnungsrichtungen für den Stapelbereich konfiguriert ist,
eine Ecke des Stapelbereichs, die der Verwendungsstation am nächsten liegt, als Startpunkt konfiguriert und
die Lagerzellen vom Startpunkt aus in den Anordnungsrichtungen sequentiell anordnet.

## Revendications

1. Procédé de génération d'aménagement de centre logistique pour un agencement de cellules de stockage dans de multiples zones d'empilement (A1, A2, A3, A4) dans un centre logistique, le procédé de génération d'aménagement de centre logistique comprenant les étapes consistant à :
recevoir (S110) des informations de configuration de base pour générer un aménagement du centre logistique ;
générer (S120), sur la base d'un historique des stocks du centre logistique, des cellules de stockage configurées pour stocker des articles manipulés dans le centre logistique ;
agencer (S130), sur la base d'un historique de sortie du centre logistique, les cellules de stockage générées pour les articles dans chaque zone d'empilement selon des combinaisons possibles de types et de directions d'agencement des articles ; et
générer (S140), sur la base d'une optimisation combinatoire, de multiples aménagements alternatifs, comparer des temps de sortie des aménagements alternatifs, et fournir un aménagement recommandé parmi les multiples aménagements alternatifs,
dans lequel l'agencement (S130) des cellules de stockage comprend :
la détermination d'un quai d'utilisation pour chacun des articles à l'aide d'une liste de quais d'utilisation dans le cas où une combinaison des articles et des directions d'arrangement pour la zone d'empilement est configurée,
la configuration un coin de la zone d'empilement le plus proche du quai d'utilisation comme point de départ, et
l'agencement séquentiel des cellules de stockage à partir du point de départ dans les directions d'agencement.

2. Procédé de génération d'aménagement de centre logistique selon la revendication 1, dans lequel les informations de configuration de base comprennent :
des informations principales relatives aux articles ;
des informations d'aménagement comprenant une configuration d'aménagement correspondant au centre logistique ;
des informations historiques comprenant des historiques passés de stocks et de sortie du centre logistique ; et
des informations de condition d'analyse configurant une période d'analyse et une condition d'arrêt pour l'extraction de l'aménagement recommandé.

3. Procédé de génération d'aménagement de centre logistique selon la revendication 2, dans lequel les informations principales comprennent au moins l'un parmi des types d'articles, types de cellules de stockage utilisées pour chaque type d'articles, dimensions de chaque type de cellule de stockage, une liste de quais d'utilisation pour chaque type d'articles, ou toute combinaison de ceux-ci.

4. Procédé de génération d'aménagement de centre logistique selon la revendication 2, dans lequel les informations d'aménagement comprennent au moins l'une parmi des informations de coordonnées des quais sur un aménagement, des informations de position de chaque zone d'empilement, une longueur de colonne de chaque type de cellules de stockage agencées dans la zone d'empilement, une largeur d'une allée entre les cellules de stockage, une largeur de passage transversale, des informations relatives à une structure située dans la zone d'empilement, ou toute combinaison de celles-ci.

5. Procédé de génération d'aménagement de centre logistique selon la revendication 1, dans lequel, lors de la génération (S120) des cellules de stockage, une quantité moyenne des stocks dans le centre logistique au cours d'une période d'analyse est obtenue à partir de l'historique des stocks, et les cellules de stockage sont générées pour accueillir la totalité de la quantité moyenne des stocks.

6. Procédé de génération d'aménagement de centre logistique selon la revendication 1, dans lequel, lors de l'agencement (S130) des cellules de stockage, le nombre de temps de sortie depuis chacun de types des cellules de stockage est identifié d'après l'historique de sortie, et un type de cellule de stockage ayant un nombre plus élevé de temps de sortie est agencé au point de départ.

7. Procédé de génération d'aménagement de centre logistique selon la revendication 1, dans lequel la fourniture de l'aménagement recommandé comprend :
l'extraction (S141) des aménagements alternatifs en utilisant un modèle de recherche basé sur une métaheuristique pour l'optimisation combinatoire, et le calcul de temps de sortie en fonction des aménagements alternatifs ;
l'identification (S142) d'une condition d'arrêt et, dans le cas où la condition d'arrêt n'est pas satisfaite, la répétition de la réextraction d'un aménagement alternatif à l'aide du modèle de recherche et le calcul d'un temps de sortie en fonction de l'aménagement alternatif réextrait ; et
dans le cas où la condition d'arrêt est satisfaite, l'extraction (S144), sur la base des temps de sortie, d'un aménagement recommandé parmi les multiples aménagements alternatifs extraits.

8. Procédé de génération d'aménagement de centre logistique selon la revendication 7, dans lequel, lors de la répétition de la réextraction et du calcul, l'aménagement alternatif est réextrait en modifiant au moins l'un parmi l'ordre d'agencement et la direction d'agencement de types d'articles attribués à de multiples zones d'empilement.

9. Procédé de génération d'aménagement de centre logistique selon la revendication 7, dans lequel, lors du calcul du temps de sortie, le temps de sortie est calculé en obtenant une distance de sortie requise pour le déplacement depuis toutes les cellules de stockage incorporées dans l'aménagement alternatif jusqu'à des quais d'utilisation respectifs, et en appliquant une vitesse de déplacement de chaque équipement utilisé pour la sortie sur la distance de sortie.

10. Procédé de génération d'aménagement de centre logistique selon la revendication 7, dans lequel la condition d'arrêt est l'une parmi :
lorsque le nombre de recherches par le modèle de recherche atteint un nombre prédéterminé ;
lorsqu'un temps de recherche dépasse un temps prédéterminé ; et
lorsque le modèle de recherche ne parvient pas à extraire un aménagement alternatif ayant un temps de sortie plus court dans un nombre limité de temps après extraction d'un premier aménagement dans lequel le temps de sortie est le plus court.

11. Procédé de génération d'aménagement de centre logistique selon la revendication 8, dans lequel, lors de l'extraction (S144) de l'aménagement recommandé, l'aménagement recommandé est fourni avec une inclusion supplémentaire d'utilisation de celui-ci.

12. Procédé de génération d'aménagement de centre logistique selon la revendication 1, comprenant en outre :
l'obtention, dans le cas où un aménagement d'utilisation appliqué au centre logistique est reçu, d'un temps de sortie de l'aménagement d'utilisation ;
la comparaison du temps de sortie de l'aménagement d'utilisation avec le temps de sortie de l'aménagement recommandé ; et
la fourniture d'aménagements recommandés en fonction de leurs temps de sortie.

13. Programme d'ordinateur stocké sur un support de manière à effectuer le procédé de génération d'aménagement de centre logistique selon la revendication 1 lorsqu'il est exécuté par un processeur (14).

14. Dispositif de génération d'aménagement de centre logistique pour générer un aménagement de centre logistique en agençant des cellules de stockage dans de multiples zones d'empilement dans un centre logistique, comprenant :
un processeur (14) configuré pour :
recevoir (S110) des informations de configuration de base pour générer un aménagement du centre logistique ;
générer (S120), sur la base d'un historique des stocks du centre logistique, des cellules de stockage configurées pour stocker des articles manipulés dans le centre logistique ;
agencer (S130), sur la base d'un historique de sortie du centre logistique, les cellules de stockage pour les articles dans chaque zone d'empilement selon des combinaisons possibles de types et de directions d'agencement des articles ; et
générer (S140), sur la base d'une optimisation combinatoire, de multiples aménagements alternatifs, comparer des temps de sortie des aménagements alternatifs, et fournir un aménagement recommandé parmi les multiples aménagements alternatifs,
dans lequel le processeur (14) est en outre configuré pour agencer (S130) les cellules de stockage pour les articles en :
déterminant un quai d'utilisation pour chacun des articles à l'aide d'une liste de quais d'utilisation dans le cas où une combinaison des articles et des directions d'arrangement pour la zone d'empilement est configurée,
configurant un coin de la zone d'empilement le plus proche du quai d'utilisation comme point de départ, et
agençant séquentiellement les cellules de stockage à partir du point de départ dans les directions d'agencement.
